# EUROPEAN PATENT APPLICATION

(11) **EP 4 628 269 A1**
(43) Date of publication of application: **08.10.2025**
(21) Application number: 24220576.3
(22) Date of filing: 17.12.2024
(51) Int. Cl.: B28B 1/00, B28B 5/02, B28B 13/02

(54) **PROCESS AND EQUIPMENT FOR MAKING SLABS MADE OF CERAMIC AND/OR STONE MATERIAL**

(30) Priority: 19.12.2023 IT 202300027087
(71) Applicant: Siti - B&T Group S.p.A., 41043 Formigine (Modena) (IT)
(72) Inventor: TAROZZI, Fabio, 41043 Formigine (MO) (IT)
(74) Representative: Zoli, Filippo

(57) **Abstract**

The process for making slabs made of ceramic and/or stone material, comprises the following phases of:
- supply of at least one base material (B) of the ceramic and/or stone type in the form of powder and/or granules and/or flakes;
- supply of at least one additional material (A) of the ceramic and/or stone type in the form of powder and/or granules and/or flakes, different from the base material (B);
- delivery of the base material (B) over a supporting surface (3) to obtain a slab to be compacted (L) having an initial thickness (S1);
- pressing of the slab to be compacted (L) to obtain a compacted slab (C) having a final thickness (S2);

and comprises, subsequently to the delivery and prior to the pressing, the following phases of:
- direct application of the additional material (A) within the slab to be compacted (L) to define at least one vein (20) having a color and/or type different from the base material (B);

the pressing affecting both the base material (B) and the additional material (A) so applied.

## Description

### Technical Field

The present invention relates to a process and a piece of equipment for making slabs made of ceramic and/or stone materials.

### Background Art

The production of slabs made of ceramic and/or stone and/or lithoid material, such as slabs made of mineral grits bonded with resins, generally involves a phase of deposition of a base material, which may precisely consist of a ceramic material or of a mixture of minerals in granular form (e.g., marble, granite, glass, mirror fragments, and/or others) as well as quartz powder and, indeed, resins acting as binders, on a supporting surface, such as a belt or a mold, to form a slab to be compacted, and a subsequent phase of pressing so as to obtain a compacted slab.

Depending on the type of base material, additional phases, such as firing and subsequent cooling, are then carried out in order to obtain a product with high mechanical and chemical properties.

Thus, the piece of equipment required to carry out these phases comprises a supporting surface, delivery means of the base material onto the supporting surface so as to form a slab to be compacted and pressing means to obtain a compacted slab.

As is known to the industry technician, depending on the type of base material used, the embodiment and the technical characteristics of the means making up the relevant equipment may change.

To date, the market demands more and more special aesthetic effects, such as the reproduction of natural stones, such as marble or granite, characterized by "veins", or stripes having a wavy pattern of a different color than the base material, running through its entire thickness.

A piece of equipment of known type used to obtain this effect involves the use of a hopper running the full width of the slab to be obtained and within which is loaded the base material to be deposited on the supporting surface, a relevant movement being provided between the latter and the hopper itself.

In order to achieve a "veined" effect, layers of different types of material are deposited inside the hopper, which layers are deposited on the supporting surface in succession.

However, the slabs obtained in this way have "longitudinal" veins, that is, they do not cross the entire thickness thereof. Thus, this drawback prevents obtaining a so-called "through vein", typical of natural stones, and is particularly evident in cases where slabs having two surfaces at right angles to each other are to be made, as in the case of countertops for kitchens, bathrooms, or other similar applications, where it is not possible to obtain a substantially continuous vein along the two orthogonal surfaces.

In addition, due to the friction of the material on the walls, the layers of material are not evenly deposited on the supporting surface, so the color intensity of the resulting veins is blurred.

### Description of the Invention

The main aim of the present invention is to devise a process and a piece of equipment for making slabs made of ceramic and/or stone material which allow for simple and reliable veins of the through type.

Within this aim, one object of the present invention is to make aesthetic variants distinguished by colors and/or patterns not obtainable using the natural materials mentioned above, thus enabling a very versatile and customizable production. Another object of the present invention is to allow the reproducibility of the aesthetic effects obtained.

Another object of the present invention is to devise a process and a piece of equipment for making slabs made of ceramic and/or stone material which allow the aforementioned drawbacks of the prior art to be overcome within the framework of a simple, rational, easy and effective to use as well as affordable solution.

The aforementioned objects are achieved by this process for making slabs made of ceramic and/or stone material according to claim 1.

The aforementioned objects are also achieved by this piece of equipment for making slabs made of ceramic and/or stone material according to claim 8.

### Brief Description of the Drawings

Other characteristics and advantages of the present invention will become more apparent from the description of a preferred, but not exclusive, embodiment of a process for making slabs made of ceramic and/or stone material, as well as a piece of equipment for its implementation, illustrated by way of an indicative, yet nonlimiting example, in the accompanying tables of drawings in which:
Figure 1 is a schematic and partial representation of a piece of equipment for the implementation of the process according to the invention during the phase of deposition of the base material in a first embodiment;
Figure 2 is a schematic and partial representation of a piece of equipment for the implementation of the process according to the invention during the phase of application of the additional material;
Figure 3 is a magnifying view of a detail of the piece of equipment in Figure 2;
Figure 4 is an axonometric view of a delivery element according to the invention, in one embodiment;
Figure 5 is an axonometric view of a delivery element according to the invention, in a further embodiment;
Figure 6 is an axonometric view of a delivery element according to the invention, in a further embodiment;
Figure 7 is an axonometric view of the application means according to the invention, in a particular embodiment;
Figure 8 is a section of the application means in Figure 7;
Figure 9 is an axonometric view of a tool according to the invention, in a particular embodiment.

### Embodiments of the Invention

With particular reference to these figures, reference numeral 1 globally denotes a piece of equipment for making slabs made from ceramic and/or stone material.

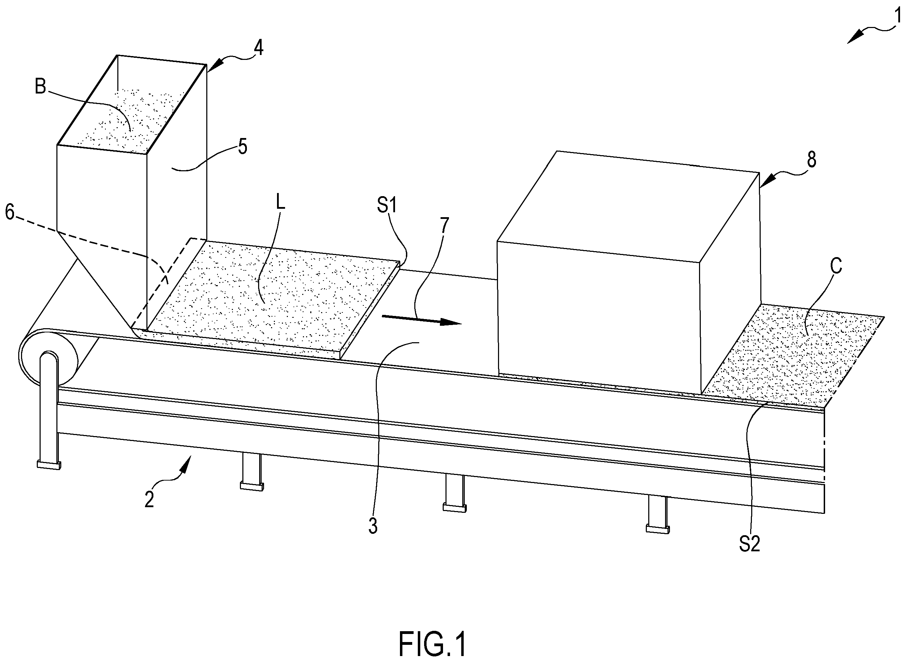

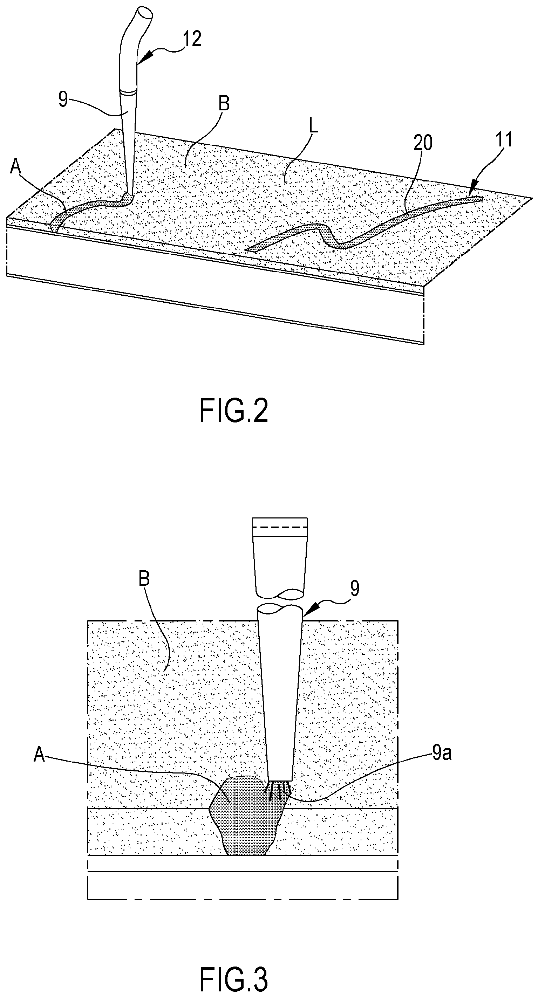

The piece of equipment 1 comprises a load-bearing frame 2 with which at least one supporting surface 3 is associated. More particularly, the supporting surface 3 is of the type of a belt (as shown in Figure 1) or of the type of a mold (as shown in Figure 2). The supporting surface 3 may also be movable by shifting along a direction of forward movement 7 or, alternatively, of a fixed type.

The piece of equipment 1 then comprises delivery means 4 of at least one base material B on the supporting surface 3 to obtain a slab to be compacted L having an initial thickness S1.

Advantageously, the delivery means 4 comprise at least one hopper 5 provided with an output mouth 6 running along a direction of delivery and arranged above the supporting surface 3.

The base material B contained within the hopper 5 may fall by gravity onto the supporting surface 3, or a delivery device (not visible in detail in the figures) may be provided and arranged within the hopper itself and movable along the direction of delivery, which is adapted to deliver the base material onto the supporting surface 3. In turn, the hopper 5 can be fed by one or more extractor belts (not visible in the figures), which are adapted to extract the various materials to be introduced inside the hopper itself.

The base material B may be of the ceramic type in the form of atomized, grains, or flakes, and/or stone (such as marble, granite, minerals or other natural stones) in the form of powder and/or granules and/or flakes and mixed with a binder of a cementitious or resinous nature. The base material B may consist of a single type of material or of a plurality of primary materials of different type and/or having different colors.

The base material B contained within the hopper 5 may then have substantially uniform particle size and color, or it may be composed of a plurality of materials differing from each other in type and/or color, mixed together or overlapping to define a plurality of layers.

The slabs to be compacted L can then be of the ceramic type, thus intended to be subjected to a firing process, or of the type of mineral grit slabs (also called quartz slabs), intended to be subjected to a vibro/compression under vacuum process. The characteristics of the materials from which the slabs could be made, in any case, are in no way a limitation to the objects of the present invention.

Thus, the slab to be compacted L has a face L' placed resting against the supporting surface 3, which corresponds to the exposed face of the finished slab, and a face L" turned upwards, which corresponds to the laying face of the finished slab.

The piece of equipment 1 also comprises pressing means 8 of the slab to be compacted L, not shown in detail in the figures, to obtain a compacted slab C having a lower final thickness S2 than the initial thickness S1.

The pressing means 8 generally comprise a pad, adapted to exert a force of predefined intensity on the slab to be compacted, and a counteracting element. The pressing means 8 may vary constructively depending on the type of material used and are of a type known to the technician in the field.

The pressing means 8 can be of the dynamic type (particularly in the case where the material used is of the ceramic type), i.e., they can comprise a pair of belts adapted to contact the opposite faces of the slab to be compacted L during its forward movement, where one of these belts serves as a pad and the other as a counteracting element, or they can be of the static type, i.e., the pad exerts the pressing force on the slab to be compacted when this is stationary. Thus, pressing can be carried out either continuously, i.e., during the displacement of the slab to be compacted L along the direction of forward movement 7, or discontinuously, i.e., when the slab to be compacted L is stationary.

According to the invention, the piece of equipment 1 comprises application means 12 of at least one additional material A, different from the base material B, directly within the slab to be compacted L to define at least one vein 20 of a color and/or type different from that of the base material B.

The piece of equipment 1 has no means for suctioning the base material B, so the additional material A is directly injected within the base material B by mixing them together.

Advantageously, the application means 12 comprise at least one tool 9 provided with at least one output port 9a of the additional material A and movable with respect to the supporting surface 3 along a certain path 11 so as to define a vein 20.

More particularly, the tool 9 can be moved parallel to the supporting surface 3 along at least two directions transverse to each other and parallel to the supporting surface itself.

Appropriately, the tool 9 is movable in any direction belonging to a plane that is substantially parallel or coincident (in the event of the output port 9a being substantially tangential to the supporting surface 3) to the supporting surface 3. Preferably, the tool 9 is provided with at least three degrees of freedom and is also movable in the direction of moving close to/away from the supporting surface 3 so that the depth of the vein 20 can be varied at will.

In the preferred embodiment shown in the figures, the tool 9 has an elongated shape and comprises a groove 9b running longitudinally starting from the output port 9a. The groove 9b allows the additional material A to be delivered along the entire thickness of the slab to be compacted L.

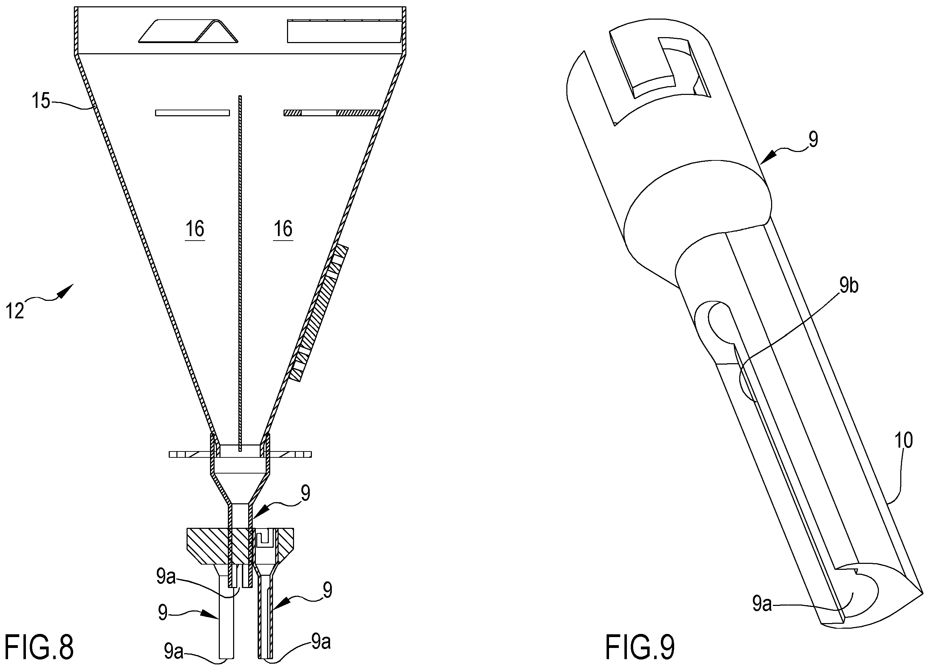

In an alternative embodiment, shown in Figure 9, the tool 9 is shaped like a wedge. In more detail, the outer surface of the tool 9 has a cusp 10, arranged on the opposite side of the groove 9b, and adapted to intercept the base material B during the displacement of tool 9 so as to facilitate the displacement thereof for the insertion of the additional material A. The cusp 10 is arranged downstream of the groove 9b with respect to the path 11.

Advantageously, the application means 12 comprise at least one delivery element 13 solidly supporting a plurality of tools 9. The tools 9 may be adapted to deliver the same type of additional material A or additional materials A of different types. This allows for a wide variety of color and aesthetic effects. In this way, for example, it is possible to obtain a plurality of vein patterns substantially parallel to each other with a single movement.

More particularly, the tools 9 supported by the same delivery element 13 are arranged at a predefined distance from each other.

The delivery element 13 is movable in rotation around a relevant axis of rotation, identified in the figures by the reference letter X.

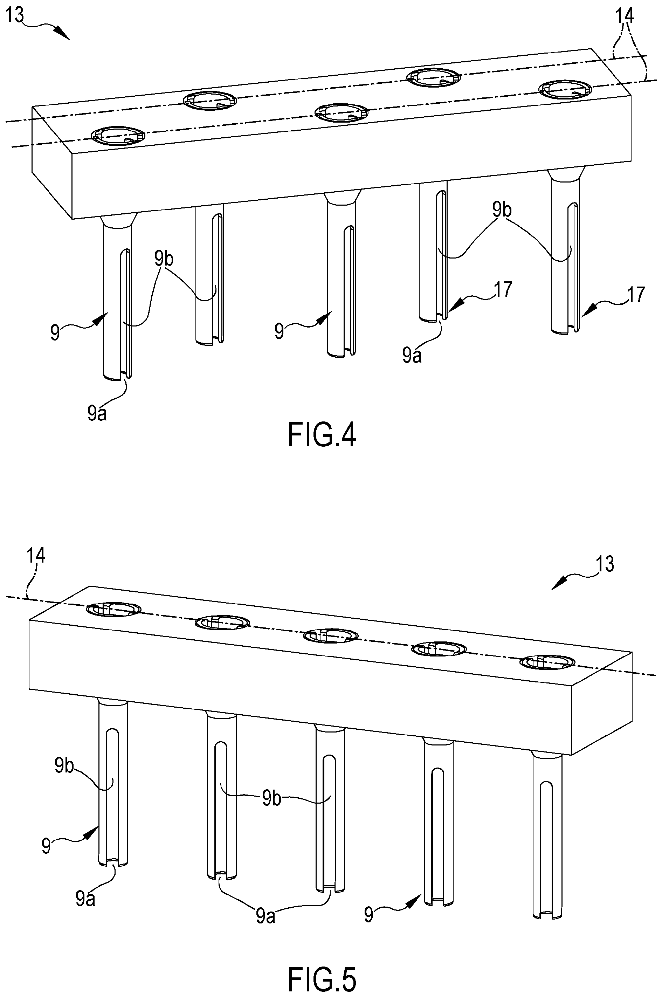

Appropriately, as in the embodiment shown in Figure 5, the tools 9 are arranged aligned with each other along a direction of application 14.

In one alternative embodiment, shown in Figure 4, the tools 9 are arranged along a plurality of rows 17 substantially parallel to each other, wherein the tools 9 belonging to each of the rows 17 are substantially aligned with each other along a relevant direction of application 14, and are offset with respect to the tools 9 of the adjacent row 17 along a direction transverse to said directions of application 14.

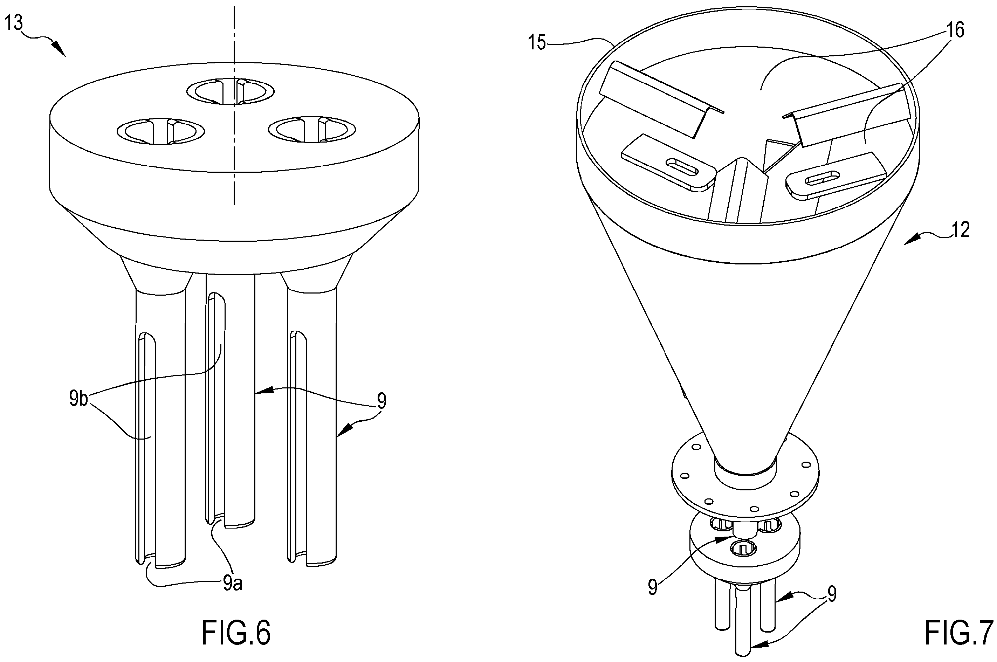

In one alternative embodiment, shown in Figure 6, the tools 9 are arranged radially with respect to the relevant axis of rotation X.

In a further embodiment, not shown in the figures, the application means 12 comprise a plurality of tools 9 movable independently of each other so as to achieve a wide variety of color effects such as e.g. a plurality of intersecting veins. Appropriately, in the embodiments shown in Figures 4 through 6, the tools 9 can be set in communication with a common container, containing the additional material A, or with relevant containers separated from each other. Advantageously, as in the embodiment shown in Figures 7 and 8, the application means 12 comprise a collection container 15 for the collection of the additional material A divided into a plurality of volumes 16 separated from each other so as to contain additional materials A of different types. Preferably, the container 15 is provided, for each volume 16, with relevant closure means (not visible in detail in the figures) which can be moved on command to allow the outflow of the relevant additional material A.

In one embodiment, two or more volumes 16 communicate with the same tool 9 so that the latter delivers a mixture of the additional materials A contained in each volume 16.

In one alternative embodiment, each volume 16 is placed in communication with a relevant tool 9, so that the different additional materials A contained in each volume 16 are delivered separately from each other.

In this way it is possible to deliver simultaneously, and at the same delivery area, a plurality of additional materials A different from each other, so as to achieve a wide range of color effects.

Preferably, the piece of equipment 1 comprises at least one electronic control unit provided with at least one command and control unit operationally connected to the tool 9 to command the displacement thereof along the path 11.

In more detail, the command and control unit can be operationally connected to a programmable memory with the path 11, e.g. by importing a drawing in electronic format or by scanning an existing slab the aesthetic effect of which is to be reproduced.

Alternatively or in addition to the presence of a programmable memory, the command and control unit can be operationally connected to command means which can be manually operated by an operator, such as of the type of a joystick. The operation of the piece of equipment in implementing the process according to the invention is as follows.

The process covered by the present invention first comprises a phase of supply of the base material B and of the additional material A as described above.

The supply of the base material B may comprise loading a single type of material inside the hopper 5 or, alternatively, mixing at least two primary materials of the ceramic and/or stone type in the form of powder and/or granules and/or flakes. Next, the base material B is delivered by depositing it on the supporting surface 3 so as to obtain a slab to be compacted L having an initial thickness S1.

More particularly, the deposition of the base material B onto the supporting surface 3 is done by dropping the base material itself through the output mouth 6 by gravity or by means of a delivery device contained within the hopper itself and not visible in the figures.

According to the invention, following the phase of delivery of the base material B, a phase of application of the additional material A is carried out within the slab to be compacted L so as to define at least one vein 20 having color and/or type different from the base material B.

Advantageously, no suction phase of the base material B is carried out between the delivery of the base material B and the application of the additional material A.

The additional material A is then injected directly into the base material B by mixing them together.

More particularly, the phase of application of the additional material A is carried out by means of the tool 9, the output port 9a and the groove 9b of which are inserted within the initial thickness S1 of the slab to be compacted L. Appropriately, the application of the additional material A is carried out by moving at least the tool 9, or the delivery element 13, with respect to the slab to be compacted L along a given path 11 so as to obtain a vein 20.

Preferably, during the application of the additional material A the slab to be compacted L moves along one direction of forward movement 7. Thus, in this embodiment, the development of the vein 20 is a function of the combined movement of the slab to be compacted L with respect to the tool 9 along the direction of forward movement 7 and of the tool 9 with respect to the slab to be compacted L along the relevant path 11.

In one alternative embodiment, during the phase of application, the slab to be compacted L is stationary and only the tool 9 moves along the path 11. Appropriately, subsequently to the application of the additional material A, a leveling phase is carried out for leveling the initial thickness S 1 of the slab to be compacted L.

Subsequently to the application of the additional material A and subsequently to its movement when this phase is provided, pressing of the slab to be compacted L is carried out, the slab comprising both the base material B and the additional material A delivered into it, so as to obtain a compacted slab C having a lower final thickness S2 than the initial thickness S1. The pressing phase is carried out by the pressing means 8.

It has in practice been ascertained that the described process, as well as the relevant equipment, achieves the intended objects, and in particular, the fact is emphasized that it makes it possible to obtain, in a practical and easy way, slabs having a wide variety of veining and aesthetic effects.

In particular, the direct injection of the additional material inside the slab to be compacted allows a vein to be obtained very quickly and conveniently.

In fact, the process and the piece of equipment according to the invention make it possible both to reproduce the aesthetic effect of natural stones, such as marble and granite, e.g. by scanning existing slabs, and to make innovative and creative aesthetic solutions not found in nature and not otherwise obtainable.

## Claims

1. Process for making slabs made of ceramic and/or stone material, comprising the following phases of:
- supply of at least one base material (B) of the ceramic and/or stone type in the form of powder and/or granules and/or flakes;
- supply of at least one additional material (A) of the ceramic and/or stone type in the form of powder and/or granules and/or flakes, different from said base material (B);
- delivery of said base material (B) over a supporting surface (3) to obtain a slab to be compacted (L) having an initial thickness (S1);
- pressing of said slab to be compacted (L) to obtain a compacted slab (C) having a final thickness (S2);
**characterized by** the fact that it comprises, subsequently to said delivery and prior to said pressing, the following phases of:
- direct application of said additional material (A) within said slab to be compacted (L) to define at least one vein (20) having a color and/or type different from said base material (B);
said pressing affecting both said base material (B) and said additional material (A) so applied.

2. Process according to claim 1, **characterized by** the fact that between said delivery of the base material (B) and said application of the additional material (A) no suction phase of the base material (B) is carried out.

3. Process according to one or more of the preceding claims, **characterized by** the fact that said application is carried out by means of a tool (9) provided with an output port (9a) for the additional material (A), wherein said output port (9a) is inserted within the initial thickness (S1) of said slab to be compacted (L) during said application.

4. Process according to one or more of the preceding claims, **characterized by** the fact that said application is carried out by moving said tool (9) with respect to said slab to be compacted (L) along a certain path (11).

5. Process according to one or more of the preceding claims, **characterized by** the fact that, during said application, said slab to be compacted (L) moves along a direction of forward movement (7).

6. Process according to one or more of claims 1 to 4, **characterized by** the fact that, during said application, said slab to be compacted (L) is stationary.

7. Process according to one or more of the preceding claims, **characterized by** the fact that it comprises, subsequently to said application of the additional material (A), a phase of leveling the initial thickness (S1) of said slab to be compacted (L).

8. Piece of equipment (1) for making slabs made of ceramic and/or stone material, comprising:
- a load-bearing frame (2);
- at least one supporting surface (3) associated with said load-bearing frame (2);
- delivery means (4) of at least one base material (B) of the ceramic and/or stone type in the form of powder and/or granules on said supporting surface (3) to obtain a slab to be compacted (L) having an initial thickness (S1);
- pressing means (8) of said slab to be compacted (L) to obtain a compacted slab (C) having a final thickness (S2) lower than said initial thickness (S1);
**characterized by** the fact that it comprises application means (12) of at least one additional material (A), different from said base material (B), directly within said slab to be compacted (L) to define at least one vein (20) having a color and/or type different from said base material (B).

9. Piece of equipment (1) according to claim 8, **characterized by** the fact that said application means (12) comprise at least one tool (9) provided with an output port (9a) of the additional material (A) and movable with respect to said supporting surface (3) along at least two directions transverse to each other and parallel to the supporting surface itself to define a certain path (11) for the development of said vein (20).

10. Piece of equipment (1) according to claim 9, **characterized by** the fact that said tool (9) is movable in rotation around a relevant axis of rotation (X).

11. Piece of equipment (1) according to claim 9 or 10, **characterized by** the fact that said tool (9) has an elongated shape and comprises a groove (9b) running longitudinally starting from said output port (9a).

12. Piece of equipment (1) according to claim 11, **characterized by** the fact that the outer surface of said tool (9) has a cusp (10), arranged on the opposite side of said groove (9b).

13. Piece of equipment (1) according to one or more of claims 8 to 10, **characterized by** the fact that said application means (12) comprise at least one delivery element (13) supporting a plurality of said tools (9) locked together.

14. Piece of equipment (1) according to claim 11, **characterized by** the fact that said tools (9) are arranged at a predefined distance from each other and are aligned with each other along a direction of application (14).

15. Piece of equipment (1) according to claim 13, **characterized by** the fact that said tools (9) are arranged along a plurality of rows (17) substantially parallel to each other, wherein the tools (9) belonging to each of said rows (17) are substantially aligned with each other along a relevant direction of application (14), and are offset with respect to the tools (9) of the adjacent row (17) along a direction transverse to said directions of application (14).

16. Piece of equipment (1) according to claim 13, **characterized by** the fact that said delivery element (13) is movable in rotation around a relevant axis of rotation (X) and by the fact that said tools (9) are arranged radially with respect to said axis of rotation (X).

17. Piece of equipment (1) according to one or more of claims 8 to 16, **characterized by** the fact that said application means (12) comprise a container (15) for the collection of the additional material (A) divided into a plurality of volumes (16) separated from each other so as to contain additional materials (A) of different types, wherein said volumes (16) communicate with at least one of said tools (9).

18. Piece of equipment (1) according to claim 17, **characterized by** the fact that said container (15) is provided, for each said volume (16), with relevant closure means which can be moved by command to allow the release of the relevant additional material (A).

19. Piece of equipment (1) according to claim 17 or 18, **characterized by** the fact that two or more of said volumes (16) communicate with the same tool (9), so that the latter releases a mixture of the additional materials (A) contained in each volume (16).

20. Piece of equipment (1) according to claim 17 or 18, **characterized by** the fact that each said volume (16) is placed in communication with a relevant tool (9), so that the different additional materials (A) contained in each volume (16) are delivered separately from each other.
